(19) Europäisches Patentamt
European Patent Office
Office européen des brevets

(11) Veröffentlichungsnummer: **0 041 239**
**A2**

(12) # EUROPÄISCHE PATENTANMELDUNG

(21) Anmeldenummer: **81104095.5**

(22) Anmeldetag: **27.05.81**

(51) Int. Cl.³: **C 09 B 67/42**
C 09 B 67/24, D 06 P 1/613

(30) Priorität: **04.06.80 CH 4334/80**

(43) Veröffentlichungstag der Anmeldung:
**09.12.81 Patentblatt 81/49**

(84) Benannte Vertragsstaaten:
**CH DE FR GB IT LI**

(71) Anmelder: **CIBA-GEIGY AG**
**Patentabteilung Postfach**
**CH-4002 Basel(CH)**

(72) Erfinder: **Abel, Heinz**
**Egertenstrasse 5**
**CH-4153 Reinach(CH)**

(72) Erfinder: **Hugelshofer, Paul, Dr.**
**Donnerbaumweg 29**
**CH-4132 Muttenz(CH)**

(74) Vertreter: **Berg, Wilhelm, Dr. et al,**
**Dr. Berg, Dipl.-Ing. Stapf, Dipl.-Ing. Schwabe, Dr. Dr.**
**Sandmair Mauerkircherstrasse 45**
**D-8000 München 80(DE)**

(54) **Stabile konzentrierte flüssige Zubereitungen von metallfreien Farbstoffen, Verfahren zu ihrer Herstellung und ihre Verwendung.**

(57) Konzentrierte flüssige Zubereitungen von Textil-Leder- oder Papierfarbstoffen, die
(1) metallfreie Farbstoffe,
(2) nichtionische hydrotrop wirkende Verbindungen, mindestens eine der Komponenten (3) oder (4), wobei die Komponente
(3) ein Umsetzungsprodukt aus einer Fettsäure mit 8 bis 22 Kohlenstoffatomen und 1 bis 2 Mol Diäthanolamin und die Komponente
(4) eine Verbindung der Formel

$$R\text{-}A\text{-}(CH_2\underset{\displaystyle R_1}{\underset{|}{C}}HO)_m\text{-}X$$

ist, worin R ein aliphatischer Kohlenwasserstoffrest mit 8 bis 22 Kohlenstoffatomen oder ein cycloaliphatischer, aromatischer oder aliphatisch-aromatischer Kohlenwasserstoff-rest mit 10 bis 22 Kohlenstoffatomen, $R_1$ Wasserstoff oder Methyl,

A -O- oder $\text{-}\underset{\displaystyle O}{\underset{\|}{C}}\text{-}O\text{-}$, X der Säurerest einer anorganischen, Sauerstoff enthaltenden Säure, der Säurerest einer mehrbasischen Carbonsäure oder ein Carboxyalkyrest und m eine Zahl von 1 bis 50 ist,
(5) Wasser, ein wasserlösliches organisches Lösungsmittel mit einem Siedepunkt von mindestens 80°C oder ein Gemisch aus beiden und
(6) gegebenenfalls übliche Einstellmittel enthalten,
zeigen über einen weiten Temperaturbereich eine ausgezeichnete Stabilität und bilden beim Verdünnen mit Wasser oder Lösungsmitteln keine unerwünschten Mehrphasensysteme oder Ausfällungen.

EP 0 041 239 A2

DR. W. BERG DIPL.-ING. O. STAPF
DIPL.-ING. SCHWABE DR. DR. SANDMAIR
PATENTANWÄLTE
8 MÜNCHEN 80, MAUERKIRCHERSTR. 45

0041239



Anwaltsakte: 50 162 27. Mai 1981

CIBA-GEIGY AG
Basel / Schweiz

Stabile konzentrierte flüssige Zubereitungen von metallfreien Farbstoffen, Verfahren zu ihrer Herstellung und ihre Verwendung.

Die vorliegende Erfindung betrifft stabile konzentrierte flüssige Zubereitungen von metallfreien Textil-, Leder oder Papierfarbstoffen.

Gegenstand der vorliegenden Erfindung sind stabile konzentrierte flüssige Zubereitungen von Textil-, Leder- oder Papierfarbstoffen, dadurch gekennzeichnet, dass sie

(1) metallfreie Farbstoffe,

(2) nichtionische hydrotrop wirkende Verbindungen, mindestens eine der Komponenten (3) oder (4), wobei die Komponente

(3) ein Umsetzungsprodukt aus einer Fettsäure mit 8 bis 22 Kohlenstoffatomen und 1 bis 2 Mol Diäthanolamin und die Komponente

(4) eine Verbindung der Formel

(1) $R-A-(CH_2\underset{\displaystyle R_1}{\underset{|}{C}}HO)_m-X$

ist, worin R ein aliphatischer Kohlenwasserstoffrest mit 8 bis 22 Kohlenstoffatomen oder ein cycloaliphatischer, aromatischer oder aliphatisch-aromatischer Kohlenwasserstoffrest mit 10 bis 22 Kohlenstoffatomen, $R_1$ Wasserstoff oder Methyl, A -O- oder $-\overset{\displaystyle O}{\overset{\|}{C}}-O-$, X der Säurerest einer anorganischen, Sauerstoff enthaltenden Säure, der Säurerest

einer mehrbasischen Carbonsäure oder ein Carboxyalkylrest und m eine Zahl von 1 bis 50 ist,

(5) Wasser, ein wasserlösliches organisches Lösungsmittel mit einem Siedepunkt von mindestens 80°C oder ein Gemisch aus beiden und

(6) gegebenenfalls übliche Einstellmittel enthalten.

Gegenstand der Erfindung ist ferner ein Verfahren zur Herstellung der flüssigen Zubereitungen sowie ihre Verwendung zur Herstellung von Klotzflotten, Färbebädern, Druckpasten oder Spritzlösungen, die insbesondere zum Färben und Bedrucken von Textilmaterialien, Leder und Papier verwendet werden. Bei den Farbstoffen handelt es sich sowohl um solche, die in Wasser gut löslich als auch um solche, die in Wasser schwerlöslich bis unlöslich sind.

Als metallfreie Farbstoffe können bekannte Farbstoffe der verschiedensten Farbstoffklassen verwendet werden, wie z.B. Oxazin-Triphenylmethan-, Xanthen-, Nitro-, Acridon-, Stilben-, Perinon-, Chinophthalon-, Naphthochinonimin und Azomethinfarbstoffe, vor allem jedoch saure Anthrachinon- und anionische Azofarbstoffe (Mono-, Bis- und Polyazofarbstoffe).

Die Farbstoffe können mit den zu färbenden Substraten reaktiv oder nicht reaktiv sein.

Als Reaktivgruppierungen kommen z.B. in Betracht: Epoxygruppen, Aethyleniminggruppen, Isocyanatgruppen, Isothiocyanatgruppen, Carbaminsäurearylestergruppen, die Propiolsäureamidgruppierung, Mono- und Dichlorcrotonylgruppen, Chloracrylaminogruppen, Acrylaminogruppen, die einen labilen Substituenten enthaltenden Gruppierungen, welche unter Mitnahme des Bindungselektronenpaares leicht aufspaltbar sind, z.B. Sulfohalogenidgruppen, aliphatisch gebundene Schwefelsäureestergruppen und aliphatisch gebundene Sulfonyloxygruppen und Halogenatome, insbesondere ein aliphatisch gebundenes Chloratom, oder die Vinylacylgruppe, wie z.B. die Vinylsulfogruppen

($a_2$) 1,2-Propylenoxyd, Umsetzungsprodukte aus Alkylenoxyden und wasserunlöslichen aliphatischen Monoalkoholen mit mindestens 8 Kohlenstoffatomen, Umsetzungsprodukte aus Alkylenoxyden und Aryl- oder Alkylphenolen, Umsetzungsprodukte aus gesättigten Dicarbonsäuren mit 3 bis 10 Kohlenstoffatomen und 1,2-Propylenoxyd oder Polypropylenglykolen, Umsetzungsprodukte aus Fettsäuren mit 10 bis 18 Kohlenstoffatomen und 1,2-Propylenoxyd oder Polypropylenglykolen, Umsetzungsprodukte aus Fettsäuren mit 10 bis 18 Kohlenstoffatomen, 3- bis 6-wertigen Alkoholen und 1,2-Propylenoxyd oder Umsetzungsprodukte aus Fettsäuren mit 10 bis 18 Kohlenstoffatomen, Polyalkylenpolyaminen und 1,2 - Propylenoxyd sind.

6. Zubereitungen nach Anspruch 5, dadurch gekennzeichnet, dass die Komponente (2) ein Umsetzungsprodukt aus o-Phenylphenol und 5 bis 15 Mol Aethylenoxyd ist.

7. Zubereitungen nach Anspruch 1, dadurch gekennzeichnet, dass die Komponente (3) ein Umsetzungsprodukt aus Kokosfettsäure, Laurinsäure, Oelsäure oder Stearinsäure und 2 Mol Diäthanolamin ist.

8. Zubereitungen nach Anspruch 1, dadurch gekennzeichnet, dass die Komponente (4) eine Verbindung der Formel

$$R-A-(CH_2CH_2O)_n-X$$

ist, worin R, A und X die in Anspruch 1 angegebenen Bedeutungen haben und n eine Zahl von 1 bis 9, vorzugsweise von 1 bis 4, ist.

9. Zubereitungen nach Anspruch 8, dadurch gekennzeichnet, dass die Komponente (4) eine Verbindung der Formel

$$R_2O-(CH_2CH_2O)_n-X$$

ist, worin $R_2$ ein gesättigter oder ungesättigter Kohlenwasserstoffrest, o-Phenylphenol oder Alkylphenyl mit 4 bis 12 Kohlenstoffatomen im Alkylteil ist, und X und n die in Anspruch 8 angegebenen Bedeutungen haben.

10. Zubereitungen nach Anspruch 1, dadurch gekennzeichnet, dass die Verbindungen der Komponente (4) als Alkalimetall-, Ammonium- oder Aminsalze vorliegen.

11. Zubereitungen nach Anspruch 1, dadurch gekennzeichnet, dass die Komponente (5) Wasser, ein bei Raumtemperatur flüssiger mehrwertiger Alkohol oder dessen Aether und/oder Ester, Tetramethylharnstoff oder ein Gemisch aus Wasser und diesen Lösungsmitteln ist.

12. Verfahren zur Herstellung von stabilen konzentrierten flüssigen Zubereitungen von metallfreien Farbstoffen nach Anspruch 1, dadurch gekennzeichnet, dass man die Farbstoffe mit den Komponenten (2) und (3), (2) und (4) oder (2), (3) und (4) in beliebiger Reihenfolge in Wasser, einem wasserlöslichen organischen Lösungsmittel oder deren Mischungen, gegebenenfalls in Gegenwart üblicher Einstellmittel, vermischt.

13. Verfahren zur Herstellung von stabilen konzentrierten flüssigen Zubereitungen von metallfreien wasserlöslichen Farbstoffen nach Anspruch 1, dadurch gekennzeichnet, dass man aus einer wässrigen Lösung oder Suspension mindestens eines metallfreien wasserlöslichen

Die Umsetzungsprodukte aus ($a_1$) und ($a_2$) können Molekulargewichte von insbesondere 2000 bis 6000 und vorzugsweise von etwa 2000 bis 4000 aufweisen. Erhalten werden diese Umsetzungsprodukte in der Regel durch Anlagerung von etwa 30 bis 120 Mol 1,2-Propylenoxyd an 1 Mol eines 1- bis 6-wertigen aliphatischen Alkohols mit 1 bis 6 Kohlenstoffatomen, eines Monoalkyl- oder Monoalkylolmonoamins oder eines Polyalkylenpolyamins.

Als Beispiele für die 1- bis 6-wertigen Alkohole seien z.B. Methyl-, Aethyl-, Propyl- oder Butylalkohol, Aethylenglykol, Di- und Triäthylenglykol, Propylenglykol, Dipropylenglykol, Propan-1,3-diol, Butan-1,2-, -1,3-, -1,4- und -2,3-diol, Glyzerin, Trimethyloläthan- und -propan, Hexan-1,2,5- und -1,2,6-triol, 3-Hydroxymethylpentan-2,4-diol, Erythrit, Pentaerythrit, Dipentaerythrit, Mannit oder Sorbit genannt.

Bevorzugt sind 2- bis 6-wertige Alkohole mit 2 bis 6 Kohlenstoffatomen, wie Aethylenglykol, Propylenglykol, Glyzerin, Pentaerythrit, Sorbit, Trimethyloläthan und Trimethylolpropan, wobei Propylenglykol besonders bevorzugt ist.

Die Monoalkylmonoamine können 1 bis 18, insbesondere 1 bis 6 und vorzugsweise 2 bis 4 Kohlenstoffatome enthalten und sind z.B. Aethyl-, Propyl-, Octyl-, Decyl-, Dodecyl-, Hexadecyl- oder Octadecylamin.

Bei den Monoalkylolmonoaminen handelt es sich in der Regel um solche mit 1 bis 6, vorzugsweise 2 bis 4 Kohlenstoffatomen, wie z.B. Aethanol-, Propanol-, Isopropanol- oder Butanolamin.

Die Polyalkylenpolyamine entsprechen vorzugsweise der Formel

(2) $H_2N(CH_2CH_2NH)_rCH_2CH_2NH_2$ ,

worin r gleich 0 oder eine Zahl von 1 bis 3 ist.

Die Verbindungen der Komponente (2) sind zum grossen Teil bekannte Handelsprodukte. Im einzelnen seien 1,2-Propylenoxyd-Anlagerungsprodukte an die folgenden Alkohole, Mono- und Polyamine genannt. In Klammern wird das bevorzugte mittlere Molekulargewicht angegeben. Aethylenglykol (2000), Propylenglykol (2000) und (2700), Glycerin (3000), (3100) und (4000), Trimethylolpropan (2500), (3200), (4000) und (6300), Aethylendiamin (3600), Monoisopropanolamin (2300), ferner Trimethylolpropan-1,2-Propylenoxyd-Aethylenoxyd (3700).

Ebenfalls als Komponente (2) geeignet sind Alkylenoxyd-Umsetzungsprodukte von wasserunlöslichen aliphatischen Monoalkoholen mit mindestens 8 Kohlenstoffatomen, wie etwa die 1,2-Propylenoxyd-Umsetzungsprodukte, z.B. solche, die 1 bis 30 Mol 1,2-Propylenoxyd angelagert enthalten, insbesondere jedoch Aethylenoxyd-Umsetzungsprodukte dieser Alkohole. Die Alkohole können vorzugsweise 8 bis 18 Kohlenstoffatome enthalten, sie können gesättigt oder ungesättigt, verzweigt oder geradkettig sein und können allein oder im Gemisch eingesetzt werden.

Es können natürliche Alkohole, wie z.B. Myristylalkohol, Cetylalkohol, Stearylalkohol oder Oleylalkohol oder synthetische Alkohole, wie insbesondere 2-Aethylhexanol, ferner Triäthylhexanol, Trimethylnonylalkohol oder die Alfole (Handelsname - Continental Oil Company) verwendet werden. Bei den Alfolen handelt es sich um lineare primäre Alkohole. Die Nummer hinter dem Namen gibt die durchschnittliche Kohlenstoffzahl des Alkohols an; so ist z.B. Alfol (1218) ein Gemisch aus Decyl-, Dodecyl-, Tetradecyl-, Hexadecyl- und Octadecylalkohol. Weitere Vertreter sind Alfol (810), (12), (16), (18).

Bevorzugte Aethylenoxyd-Umsetzungsprodukte können z.B. durch die folgende Formel

(3) $R_3O(CH_2CH_2O)_sH$

dargestellt werden, worin $R_3$ ein gesättigter oder ungesättigter Kohlenwasserstoffrest, vorzugsweise ein Alkylrest, mit 8 bis 18 Kohlenstoffatomen und s eine Zahl von 1 bis 10 ist. Ist s eine Zahl von 1 bis 3, so handelt es sich in der Regel um wasserunlösliche Produkte, während die Umsetzungsprodukte mit einer grösseren Anzahl von Aethylenoxydeinheiten wasserlöslich sind. Beispiele für diese Produkte sind die Umsetzungsprodukte aus insbesondere 2-Aethylhexanol, sowie ferner Laurylalkohol, Tridecylalkohol, Hexadecylalkohol und Stearylalkohol und Aethylenoxyd.

Als Komponente (2) kommen ferner in Wasser schwerlösliche Umsetzungsprodukte aus Aethylenoxyd und/oder 1,2-Propylenoxyd und Alkylphenolen mit 4 bis 12 Kohlenstoffatomen im Alkylteil in Betracht. Vorzugsweise entsprechen diese Verbindungen der Formel

(4) 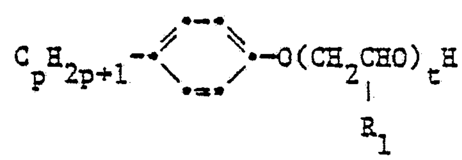 ,

worin $R_1$ Wasserstoff oder Methyl, p eine Zahl von 4 bis 12, vorzugsweise 8 bis 9, und t eine Zahl von 1 bis 60, insbesondere von 1 bis 30 und vorzugsweise 1 bis 3 ist.

Im einzelnen seien die folgenden Octyl- und Nonylphenolumsetzungsprodukte genannt: p-Nonylphenol / 30 Mol Propylenoxyd; p-Octylphenol / 2 Mol Aethylenoxyd; p-Nonylphenol / 3 Mol Aethylenoxyd; p-Nonylphenol / 60 Mol 1,2-Propylenoxyd.

Als Arylphenol-Alkylenoxydaddukte kommen insbesondere o-Phenylphenol- Aethylenoxydaddukte in Betracht. Die Zahl der Aethylenoxydeinheiten kann etwa 1 bis 20, vorzugsweise 2 bis 10, betragen.

Als Komponente (2) sind Umsetzungsprodukte aus einer gesättigten Dicarbonsäure mit 3 bis 10, insbesondere 6 bis 10, Kohlenstoffatomen und 1,2-Propylenoxyd oder Polypropylenglykolen ebenfalls geeignet. Als Dicarbonsäuren kommen z.B. Malon-, Bernstein-, Glutar-, Adipin-, Pimelin-, Kork-, Azelain- oder Sebazinsäure in Betracht. Bevorzugt sind Adipin- und Sebazinsäure. Die Zahl der 1,2-Propylenoxyd-Einheiten in den Umsetzungsprodukten kann etwa 2 bis 40 betragen. Eingesetzt werden können schliesslich auch Umsetzungsprodukte aus Fettsäuren mit 10 bis 18 Kohlenstoffatomen und 1,2-Propylenoxyd oder Polypropylenglykolen. Die Fettsäuren können gesättigt oder ungesättigt sein, wie z.B. die Caprin-, Laurin-, Myristin-, Palmitin- oder Stearinsäure oder die Decen-, Dodecen-, Tetradecen-, Hexadecen-, Oel-, Linol-, Linolen- oder Rizinolsäure. Die Anzahl der 1,2-Propylenoxyd-Einheiten in diesen Estern kann etwa gleich gross sein wie bei den vorgenannten Umsetzungsprodukten.

Weitere Umsetzungsprodukte, die als Komponente (2) geeignet sind, werden aus den vorgenannten Fettsäuren mit 10 bis 18 Kohlenstoffatomen, 3- bis 6-wertigen Alkoholen oder Polyalkylenpolyaminen und 1,2-Propylenoxyd erhalten.

Die 3- bis 6-wertigen Alkohole enthalten vorzugsweise 3 bis 6 Kohlenstoffatome und sind insbesondere Glycerin, Trimethylolpropan, Pentaerythrit und Sorbit. Die Polyalkylenpolyamine können durch die Formel (2) dargestellt werden.

Beispielsweise erwähnt seien das Umsetzungsprodukt aus Laurylsorbit und 1,2-Propylenoxyd (Molekulargewicht 2500) und das Umsetzungsprodukt aus dem Polyaminoamid der Formel

(5) $C_{11}H_{23}CONHCH_2CH_2NHCH_2CH_2NHCH_2CH_2NH_2$

(Laurinsäure/Triäthylentetramin) und 1,2-Propylenoxyd (Molekulargewicht 2600).

Alle als Komponente (2) genannten Verbindungen und Umsetzungsprodukte sind entweder bekannt, teilweise im Handel erhältlich oder nach bekannten, dem Fachmann geläufigen Methoden herstellbar.

Die zur Herstellung der Umsetzungsprodukte der Komponente (3) geeigneten Fettsäuren, gegebenenfalls auch Fettsäurederivate, wie z.B. Fettsäurealkylester, können gesättigt oder ungesättigt und gegebenenfalls substituiert sein. Im einzelnen seien die folgenden Fettsäuren erwähnt: Capryl-, Caprin-, Laurin-, Myristin-, Palmitin-, Stearin-, Arachin-, Behen-, Kokosfett- ($C_8$-$C_{18}$), Decen-, Dodecen-, Tetradecen-, Hexadecen-, Oel-, Linol-, Linolen-, Ricinol-, Eikosen-, Dokosen- oder Clupanodonsäure.

Umsetzungsprodukte aus Laurinsäure, Stearinsäure, Oelsäure und insbesondere Kokosfettsäure und 1 bis 2 Mol, insbesondere 2 Mol Diäthanolamin sind bevorzugt. Gegebenenfalls können auch Gemische der Umsetzungsprodukte der Komponente (3) eingesetzt werden.

Bei den Verbindungen der Komponente (4) handelt es sich um anionische Verbindungen. Der Rest R-A- in den Verbindungen der Formel (1) leitet sich z.B. von höheren Alkoholen wie Decyl-, Lauryl-, Tridecyl-, Myristyl-, Cetyl-, Stearyl-, Oleyl-, Arachidyl- oder Behenylalkohol ab; ferner von alicyclischen Alkoholen, wie Hydroabietylalkohol; von Fettsäuren, wie Capryl-, Caprin-, Laurin-, Myristin-, Palmitin-, Stearin-, Arachin-, Behen-, Kokosfett- ($C_8$-$C_{18}$), Decen-, Dodecen-, Tetradecen-, Hexadecen-, Oel-, Linol-, Linolen-, Eikosen-, Dokosen- oder Clupanodonsäure; von Alkylphenolen, wie

Butyl-, Hexyl-, n-Octyl-, n-Nonyl-, p-tert.-Octyl-, p-tert. Nonyl-, Decyl-, Dodecyl-, Tetradecyl- oder Hexadecylphenol oder von Arylphenolen wie o- oder p-Phenylphenolen. Bevorzugt sind Reste mit 10 bis 18 Kohlenstoffatomen, insbesondere solche, die sich von den Alkylphenolen ableiten.

Der Säurerest X ist in der Regel der Säurerest einer mehrbasischen, insbesondere niedermolekularen Mono- oder Dicarbonsäure wie z.B. von Maleinsäure, Malonsäure, Bernsteinsäure oder Sulfobernsteinsäure, oder ist ein Carboxyalkylrest, insbesondere ein Carboxymethylrest (abgeleitet insbesondere von Chloressigsäure) und ist über eine Aether- oder Esterbrücke mit dem Rest $R\text{-}A\text{-}(CH_2CHR_1O)_m$- verbunden. Insbesondere leitet sich X jedoch von anorganischen mehrbasischen Säuren ab, wie Orthophosphorsäure und Schwefelsäure. Der Säurerest X liegt vorzugsweise in Salzform, d.h. z.B. als Alkalimetall-, Ammonium- oder Aminsalz, vor. Beispiele für solche Salze sind Natrium-, Calzium-, Ammonium-, Trimethylamin-, Aethanolamin-, Diäthanolamin- oder Triäthanolaminsalze. Bei den Alkylenoxydeinheiten $-(CH_2CHR_1O)-$ in Formel (1) handelt es sich in der Regel um Aethylenoxyd und 1,2-Propylenoxydeinheiten, letztere befinden sich vorzugsweise im Gemisch mit Aethylenoxydeinheiten in den Verbindungen der Formel (1).

Die Herstellung dieser Verbindungen erfolgt nach bekannten Methoden, indem man an die genannten Alkohole, Säuren und Alkylphenole Aethylenoxyd oder alternierend in beliebiger Reihenfolge Aethylenoxyd und 1,2-Propylenoxyd anlagert und anschliessend verestert und gegebenenfalls die Ester in ihre Salze überführt. Die Verbindungen der Komponente (4) sind z.B. aus der US-Patentschrift 3 211 514 bekannt. Bevorzugt sind nun solche Verbindungen der Formel (1), die den Formeln

(6) $$R\text{-}A\text{-}(CH_2CH_2O)_{m_1}\text{-}(\underset{\displaystyle CH_3}{CH_2\underset{|}{C}HO})_{m_2}\text{-}(CH_2CH_2O)_{m_3}\text{-}X$$

und insbesondere

(7) $R\text{-}A\text{-}(CH_2CH_2O)_n\text{-}X$

entsprechen, worin R, A und X die angegebenen Bedeutungen haben, die Summe aus $m_1$, $m_2$ und $m_3$ 2 bis 20, das Verhältnis von Aethylenoxyd- zu Propylenoxydgruppen in Verbindungen der Formel (6) 1: (1 bis 2), vorzugsweise 1:1, beträgt und n eine Zahl von 1 bis 9, vorzugsweise 1 bis 5 oder 1 bis 4 ist.

Von besonderem Interesse sind ferner die anionischen Verbindungen der Formeln

(8) $R_2O(CH_2CH_2O)_n\text{-}X$ ,

worin $R_2$ ein gesättigter oder ungesättigter Kohlenwasserstoffrest, o-Phenylphenol oder Alkylphenyl mit 4 bis 12 Kohlenstoffatomen im Alkylteil ist, und X und n die angegebenen Bedeutungen haben.

Von den Verbindungen, die sich von Alkylphenyl-Aethylenoxydaddukten ableiten, sind ferner solche der Formeln

(9) 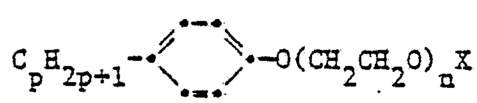

und

(10) 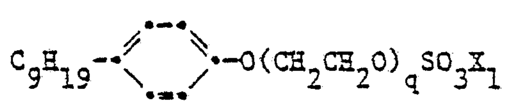

worin p eine Zahl von 4 bis 12, q eine Zahl von 1 bis 3 und $X_1$, H, $NH_4^{\oplus}$ oder ein Alkalimetallkation ist und X und n die angegebenen Bedeutungen haben, besonders bevorzugt. Es wird mindestens eine Verbindung der Komponente (4), gegebenenfalls eine Mischung der genannten Verbindungen eingesetzt.

Als Komponente (5) geeignete wasserlösliche organische Lösungsmittel mit einem Siedepunkt von mindestens 80°C, die allein oder auch in Gemischen verwendet werden können, sind beispielsweise die besonders bevorzugten, bei Raumtemperatur flüssigen, mehrwertigen Alkohole oder deren Aether und/oder Ester, wie Aethylenglykol, Propylenglykol, Di- und Triäthylenglykol, Glycerin, 2-Methylpentandiol-2,4, Aethylenglykol-, Propylenglykol- oder Diäthylenglykolmonomethyl-, monoäthyl- oder -monobutyläther, Triäthylenglykolmonobutyläther, Dipropylenglykol, Glycerin-1,3-diäthyläther, Diäthylenglykolmonoätheracetat, Thiodiglykol, Polyäthylenglykole, wasserlösliche Polyäther.

Bevorzugte Lösungsmittel sind ebenfalls Ketone und Hydroxyketone wie Methyläthylketon, Acetonylaceton, Diacetonalkohol, gegebenenfalls Aethergruppen aufweisende Monoalkohole, wie Isopropylalkohol, 2-Hydroxymethyltetrahydropyran, Tetrahydrofurfurylalkohol, Glycerinformal (5-Oxy-1,3-dioxan), Phosphorverbindungen, wie Phosphor- oder Phosphonsäureester wie z.B. Methylphosphonsäuredimethylester und N,N,N',N'-Tetramethylharnstoff.

Geeignet sind ferner auch niedrigmolekulare, aliphatische Carbonsäuren, wie Ameisensäure, Essigsäure, Milchsäure, niedrigmolekulare aliphatische Carbonsäureamide wie Formamid, N,N-Dimethylformamid, N,N-Dimethylacetamid, N,N-Dimethylmethoxyacetamid, Alkanolamine, wie z.B. Aethanolamin. Ferner können verwendet werden Lactame und Lactone wie N-Methylpyrrolidon, 1,5-Dimethylpyrrolidon, γ-Butyrolacton, flüssige Ester, wie Aethyllactat, Diäthylenglykolmonoacetat, Aethyloxybutyrat, gegebenenfalls Oxygruppen enthaltende Nitrile, wie Acetonitril, β-Hydroxypropionitril, schwefelhaltige Verbindungen wie Sulfolan (= Tetramethylensulfon), Sulfolen (= 2,3- oder 2,5-Dihydrothiophen-S-dioxyd) und deren in α- und/oder β-Stellung insbesondere durch Alkyl- oder Hydroxyalkylgruppen substituierte Derivate, Dimethylsulfoxid, Phosphorsäureamide wie Hexamethylphosphorsäuretriamid, Methylphosphonsäure-bis-N,N-dimethylamid, ferner einfache Heterocyclen, wie Tetrahydrofuran, Pyridin, Dioxan,

Glykolformal (= 1,3-Dioxolan).

Uebliche Einstellmittel können z.B. anorganische Salze, wie Natriumchlorid, Natriumsulfat, Natriumhydrogensulfat, Natriumcarbonat oder Mono-, Di- und Trinatriumphosphat, ferner Natriumbenzolsulfonat, Ligninsulfonate, Dinaphthylmethandisulfonate oder deren Abkömmlinge, Zucker, Dextrin oder Harnstoff sein.

Die erfindungsgemässen konzentrierten flüssigen Zubereitungen können als weitere Zusätze schaumdämpfende Hilfsmittel z.B. Siliconöle sowie das Pilz- und/oder Bakterienwachstum hemmende Stoffe, ferner Säuren oder Basen enthalten.

Die flüssigen Zubereitungen werden hergestellt, indem man die metallfreien Farbstoffe mit den Komponenten (2) und (3), (2) und (4) oder (2), (3) und (4) in beliebiger Reihenfolge in Wasser, einem wasserlöslichen organischen Lösungsmittel oder deren Mischungen, gegebenenfalls in Gegenwart üblicher Einstellmittel und weiterer Zusätze vermischt. Vorzugsweise geht man so vor, dass man das Gemisch (z.B. bei der Verwendung von Reaktivfarbstoffen) unter Rühren bei Raumtemperatur 15 bis 30°C oder bei Temperaturen bis 130°C, z.B. bei Temperaturen von 40 bis 130°C, vorzugsweise 40 bis 80°C, je nach Art des verwendeten Lösungsmittels erhitzt und anschliessend auf Raumtemperaturen abkühlen lässt. Bei den flüssigen Zubereitungen handelt es sich in der Regel um echte oder kolloidale Lösungen.

Die zur Herstellung der erfindungsgemässen stabilen flüssigen Zubereitungen verwendeten metallfreien Farbstoffe können Rohfarbstoffe (wie sie bei der Synthese anfallen) oder auch vorgereinigte, z.B. weitgehend entsalzte Farbstoffe sein. So kann man z.B. aus einer wässrigen Lösung bzw. Suspension eines metallfreien wasserlöslichen Rohfarbstoffes oder Rohfarbstoffgemisches Synthesenebenprodukte und/oder wasserlösliche Salze sowie gegebenenfalls auch Wasser abtrennen (z.B. Ausfällen der Farbstoffe) und anschliessend die Farbstoffe

gegebenenfalls trocknen bevor man sie wie angegeben mit den Komponenten (2) und (3), (2) und (4) oder (2), (3) und (4) in beliebiger Reihenfolge in Wasser, einem wasserlöslichen organischen Lösungsmittel oder deren Mischungen, gegebenenfalls in Gegenwart üblicher Einstellmittel, vermischt und so die erfindungsgemässen Zubereitungen erhält.

Flüssige Zubereitungen, die organische Lösungsmittel enthalten, weisen zweckmässigerweise die folgende Zusammensetzung auf:
10 bis 60, vorzugsweise 10 bis 30 Gewichtsprozent der Komponente (1),
1 bis 25, vorzugsweise 1 (3) bis 20 Gewichtsprozente der Komponente (2),
1 (3) bis 20, vorzugsweise 3 bis 15 Gewichtsprozent der Komponente (3) und/oder (4) und
20 bis 88 bzw. 20 bis 84 und vorzugsweise 30 bis 88 bzw. 84 Gewichtsprozent der Komponente (5), wobei die Komponente (5) ein wasserlösliches organisches Lösungsmittel
(oder ein Gemisch solcher Lösungsmittel) mit einem Siedepunkt von mindestens 80° C oder ein Gemisch aus Wasser und diesen Lösungsmitteln ist.

Das Gewichtsverhältnis der Komponente (2) zur Komponente (3) oder (4) oder zu beiden Komponenten kann vorzugsweise etwa 2:1 bis 1:3 betragen, während das Verhältnis der Komponenten (3) und (4) untereinander - sofern sie gemeinsam eingesetzt werden - 4:1 bis 1:2, vorzugsweise 2:1 bis 1:1 betragen kann.

Die Zubereitungen sind gut lagerstabil, d.h. sie bleiben mindestens einige Monate bei Temperaturen von -20 bis +60° C, vorzugsweise -10 bis +40° C in gebrauchsfähigem Zustand. Ausfällungen von Farbstoffen oder anderen Komponenten der Zubereitungen werden nicht beobachtet. Diese Zubereitungen können bei der Herstellung von Klotzflotten, Färbebädern, Druckpasten und Spritzlösungen sowohl mit Wasser als auch mit organischen Lösungsmitteln verdünnt werden, ohne dass z.B. in Wasser schwerlösliche bis unlösliche Farbstoffe ausfallen oder

dass es zu anderen Inhomogenitäten kommt. Mit den genannten Klotzflotten, Färbebädern, Druckpasten und Spritzlösungen kann man z.B. Textilmaterialien aus natürlichen oder synthetischen Fasermaterialien, ferner Leder oder Papier in bekannter Weise färben oder bedrucken.

Besonders geeignet sind die erfindungsgemässen stabilen konzentrierten flüssigen Farbstoffpräparationen bei der Spritzfärbung von Leder, da sie sowohl mit Wasser (z.B. 1 Teil konzentrierte Farbstoffzubereitung - 4 bis 9 Teile Wasser) als auch mit organischen Lösungsmitteln, z.B. verätherten Glykolen, aber auch Alkoholen wie Isopropanol oder Nitrolacken (z.B. bestehend aus 15 % Nitrocellulose, 10 % Kunstharz, 5 % Weichmacher, 20 % niedrigsiedende Lösungsmittel (Methanol, Aceton), 45 % Lösungsmittel mit mittleren Siedepunkten (Benzol), 5 % hochsiedende Lösungsmittel (Glykole) (Römpp's Chemie Lexikon, 7. Aufl. 1974) mischbar sind, ohne dass eine Aenderung des Verteilungszustandes (der Lösung) des Farbstoffes eintritt.

Diese Mischungen bleiben wie angegeben mehrere Monate, insbesondere aber während eines Zeitraumes von etwa 3 bis 14 Tagen stabil, zeigen also z.B. keinerlei Ausfällung, Kristallisation oder Agglomeration des Farbstoffes. Die Mischungen bilden während dieser Zeit auch keine Mehrphasensysteme.

Die Homogenität solcher Mischungen soll während der genannten Zeitspanne voll erhalten bleiben. Eine Ausfällung des Farbstoffes in der Mischung würde sich in der Applikation (z.B. Spritzapplikation) sehr störend auswirken, wie beispielsweise Verstopfung der Spritzdüsen oder sich im Broncieren des Farbstoffes auf der Oberfläche des Leders bemerkbar machen.

Sofern die erfindungsgemässen flüssigen Zubereitungen keine organischen Lösungsmittel enthalten, sind sie in der Regel nur für die Herstellung von wässrigen Klotzflotten, Färbebädern und Druckpasten geeignet, können eventuell aber auch für die Herstellung organischer Färbebäder oder Druckpasten eingesetzt werden. Ihre Zusammensetzung kann vorzugsweise wie folgt angegeben werden:
10 bis 35, vorzugsweise 10 bis 20 Gewichtsprozent der Komponente (1),
1 bis 40, vorzugsweise 20 bis 40 oder 10 bis 30 Gewichtsprozent der Komponente (2)
1 bis 40, vorzugsweise 5 bis 30 und insbesondere 5 bis 20 Gewichtsprozent der Komponente (3) und/oder (4) und mindestens 5 Gewichtsprozent Wasser, wobei sich die Gewichtsprozente auf die gesamte Präparation beziehen und die Summe der Bestandteile 100 % ergeben muss.

Auch diese wässrigen konzentrierten Präparationen sind sehr stabil und lassen sich zur Herstellung von z.B. Färbe- und Klotzflotten beliebig mit Wasser verdünnen.

In den nachfolgenden Beispielen sind die Teile Gewichtsteile und die Prozente Gewichtsprozente. Nachfolgend werden zunächst für die Komponenten (2), (3) und (4) geeignete Umsetzungsprodukte angegeben.

Komponente (2):

$B_1$ Aethylenglykol-1,2-Propylenoxyd-Umsetzungsprodukt
Molekulargewicht 2000

$B_2$ Propylenglykol-1,2-Propylenoxyd-Umsetzungsprodukt
Molekulargewicht 2000

$B_3$ Propylenglykol-1,2-Propylenoxyd-Umsetzungsprodukt
Molekulargewicht 2700

$B_4$ Glycerin-1,2-Propylenoxyd-Umsetzungsprodukt
Molekulargewicht 3000

$B_5$ Glycerin-1,2-Propylenoxyd-Umsetzungsprodukt
Molekulargewicht 3100

$B_6$ Glycerin-1,2-Propylenoxyd-Umsetzungsprodukt
Molekulargewicht 4000

$B_7$ Trimethylolpropan-1,2-Propylenoxyd-Umsetzungsprodukt
Molekulargewicht 2500

$B_8$ Trimethylolpropan-1,2-Propylenoxyd-Umsetzungsprodukt
Molekulargewicht 3200

$B_9$ Trimethylolpropan-1,2-Propylenoxyd-Umsetzungsprodukt
Molekulargewicht 4000

$B_{10}$ Trimethylolpropan-1,2-Propylenoxyd-Umsetzungsprodukt
Molekulargewicht 6300

$B_{11}$ Aethylendiamin-1,2-Propylenoxyd-Umsetzungsprodukt
Molekulargewicht 3600

$B_{12}$ Monoisopropanolamin-1,2-Propylenoxid-Umsetzungsprodukt
Molekulargewicht 2300

$B_{13}$ Methanol- (oder 1-Methoxy-2-propanol)-1,2-Propylenoxyd-Umsetzungsprodukt, Molekulargewicht 2750

$B_{14}$ Butanol-1,2-Propylenoxyd-Umsetzungsprodukt
Molekulargewicht 3000

$B_{15}$ Sorbit-1,2-Propylenoxyd-Umsetzungsprodukt
Molekulargewicht 2650

$B_{16}$ Pentaerythrit-1,2-Propylenoxyd-Umsetzungsprodukt Molekulargewicht 3000

$B_{17}$ Methyläthanolamin-1,2-Propylenoxyd-Umsetzungsprodukt Molekulargewicht 3000

$B_{18}$ Hexylamin-1,2-Propylenoxyd-Umsetzungsprodukt Molekulargewicht 3000

$B_{19}$ Triäthanolamin-1,2-Propylenoxyd-Umsetzungsprodukt Molekulargewicht 3650

$B_{20}$ Triäthylentetramin-1,2-Propylenoxyd-Umsetzungsprodukt Molekulargewicht 3050

$B_{21}$ Dipropylentriamin-1,2-Propylenoxyd-Umsetzungsprodukt Molekulargewicht 3500

$B_{22}$ Anlagerungsprodukt von 30 Mol Propylenoxyd und 1 Mol Nonylphenol

$B_{23}$ Umsetzungsprodukt von 3 Mol Aethylenoxyd und 1 Mol Nonylphenol

$B_{24}$ Umsetzungsprodukt von 2 Mol Aethylenoxyd und 1 Mol Nonylphenol

$B_{25}$ Umsetzungsprodukt von 1 Mol Aethylenoxyd und 1 Mol 2-Aethylhexanol

$B_{26}$ Umsetzungsprodukt von 3 Mol Aethylenoxyd und 1 Mol Stearylalkohol

$B_{27}$ Umsetzungsprodukt von 1 Mol Aethylenoxyd und 1 Mol Butylphenol

$B_{28}$ Umsetzungsprodukt von 10 Mol Propylenoxyd und 1 Mol Dodecylphenol

$B_{29}$ Umsetzungsprodukt von 5 Mol Aethylenoxyd und 1 Mol 2-Aethylhexanol

$B_{30}$ Umsetzungsprodukt von 8 Mol Aethylenoxyd und 1 Mol o-Phenylphenol

$B_{31}$ Umsetzungsprodukt von 3 Mol Aethylenoxyd und 1 Mol Tridecylalkohol

$B_{32}$ Umsetzungsprodukt von 3 Mol Aethylenoxyd und 1 Mol Hexadecylalkohol

$B_{33}$ Umsetzungsprodukt von 2 Mol Aethylenoxyd und 1 Mol Laurylalkohol

$B_{34}$ Umsetzungsprodukt von 10 Mol Aethylenoxyd und 1 Mol 2-Aethylhexanol

$B_{35}$ Umsetzungsprodukt von 1,2-Propylenoxyd und 1 Mol Oleylalkohol (Molekulargewicht 2000)

$B_{36}$ Umsetzungsprodukt von 60 Mol 1,2-Propylenoxyd und 1 Mol p-Nonylphenol (Molekulargewicht 3700)

$B_{37}$ Umsetzungsprodukt aus 1 Mol Polypropylenglykol (Molekulargewicht 2000) und 1 Mol Oelsäure

$B_{38}$ Umsetzungsprodukt aus 2 Mol Polypropylenglykol (Molekulargewicht 1000) und 1 Mol Adipinsäure

$B_{39}$ Umsetzungsprodukt von 1,2-Propylenoxyd und 1 Mol Laurylsorbitanester (Molekulargewicht 2500)

$B_{40}$ Umsetzungsprodukt von Propylenoxyd und 1 Mol eines Polyaminoamids der Formel

$$C_{11}H_{23}CONHCH_2CH_2NHCH_2CH_2NHCH_2CH_2NH_2$$

(Molekulargewicht 2600).

$B_{41}$ Umsetzungsprodukt von 1 Mol Tributylphenol und 5 Mol Aethylenoxyd

$B_{42}$ Umsetzungsprodukt von 1 Mol Nonylphenol und 6 Mol Aethylenoxyd

$B_{43}$ Umsetzungsprodukt von 1 Mol Octylphenol und 4 Mol Aethylenoxyd

Komponente (3):

$C_1$ Umsetzungsprodukt aus Kokosfettsäure und 2 Mol Diäthanolamin

$C_2$ Umsetzungsprodukt aus Stearinsäure und 2 Mol Diäthanolamin

$C_3$ Umsetzungsprodukt aus Oelsäure und 2 Mol Diäthanolamin

$C_4$ Umsetzungsprodukt aus Laurinsäuremethylester und 1 bis 2 Mol Diäthanolamin

Anionische Verbindungen (Komponente 4):

$D_1$ Ammoniumsalz des sauren Schwefelsäureesters des Anlagerungsproduktes von 2 Mol Aethylenoxyd und 1 Mol p-tert. Nonylphenol;

$D_2$ Ammoniumsalz des sauren Schwefelsäureesters des Anlagerungsproduktes von 3 Mol Aethylenoxyd und 1 Mol Tridecylalkohol;

$D_3$ Natriumsalz des sauren Maleinsäureesters des Anlagerungsproduktes von 2 Mol Aethylenoxyd und 1 Mol p-Nonylphenol;

$D_4$ Ammoniumsalz des sauren Schwefelsäureesters des Anlagerungsproduktes von 3 Mol Aethylenoxyd und 1 Mol p-Butylphenol;

$D_5$ Ammoniumsalz des sauren Phosphorsäureesters des Anlagerungsproduktes von 2 Mol Aethylenoxyd und 1 Mol p-Nonylphenol;

$D_6$ Natriumsalz des Carboxymethyläthers des Anlagerungsproduktes von 4 Mol Aethylenoxyd und 1 Mol p-Octylphenol;

$D_7$ Natriumsalz des Di-sulfobernsteinsäureesters des Anlagerungsproduktes von 4 Mol Aethylenoxyd und 1 Mol p-Octylphenol;

$D_8$ Ammoniumsalz des sauren Schwefelsäureesters von Kokosfettsäurediglykol;

$D_9$ Ammoniumsalz des sauren Schwefelsäureesters des Anlagerungsproduktes von 1 Mol Aethylenoxyd und 1 Mol Stearylalkohol;

$D_{10}$ Ammoniumsalz des sauren Schwefelsäureesters des Anlagerungsproduktes von 9 Mol Aethylenoxyd und 1 Mol p-Nonylphenol;

$D_{11}$ Ammoniumsalz des sauren Schwefelsäureesters des Anlagerungsproduktes von 6 Mol Aethylenoxyd und 1 Mol p-Nonylphenol;

$D_{12}$ Natriumsalz des Monosulfobernsteinsäureesters des Anlagerungsproduktes von 2 Mol Aethylenoxyd und 1 Mol p-Nonylphenol.

$D_{13}$ Ammoniumsalz des sauren Schwefelsäureesters des Anlagerungsproduktes von 1 Mol Propylenoxyd und 1 Mol Aethylenoxyd und 1 Mol Nonylphenol;

$D_{14}$ Ammoniumsalz des sauren Schwefelsäureesters des Anlagerungsproduktes von 10 Mol Propylenoxyd und 10 Mol Aethylenoxyd und 1 Mol Nonylphenol;

$D_{15}$ Ammoniumsalz des sauren Schwefelsäureesters des Anlagerungsproduktes von 6 Mol Aethylenoxyd und 1 Mol Dodecylphenol;

$D_{16}$ Ammoniumsalz des sauren Schwefelsäureesters des Anlagerungsproduktes von 6 Mol Aethylenoxyd und 1 Mol Pentadecylphenol;

$D_{17}$ Ammoniumsalz des sauren Schwefelsäureesters des Anlagerungsproduktes von 5 Mol Aethylenoxyd und 1 Mol Tributylphenol;

$D_{18}$ Ammoniumsalz des sauren Schwefelsäureesters des Anlagerungsproduktes von 3 Mol Aethylenoxyd und 1 Mol Alfol (2022);

$D_{19}$ Ammoniumsalz des sauren Schwefelsäureesters des Anlagerungsproduktes von 2 Mol Aethylenoxyd und 1 Mol Hydroabietylalkohol;

$D_{20}$ Ammoniumsalz des sauren Schwefelsäureesters des Anlagerungsproduktes von 2 Mol Aethylenoxyd und 1 Mol Octylphenol;

$D_{21}$ Ammoniumsalz des sauren Schwefelsäureesters des Anlagerungsproduktes von 50 Mol Aethylenoxyd und 1 Mol Nonylphenol;

$D_{22}$ Ammoniumsalz des sauren Schwefelsäureesters des Anlagerungsproduktes von 35 Mol Aethylenoxyd und 1 Mol Nonylphenol,

$D_{23}$ Ammoniumsalz des sauren Schwefelsäureesters des Anlagerungsproduktes von 15 Mol Propylenoxyd und 1 Mol Nonylphenol,

$D_{24}$ Ammoniumsalz des sauren Schwefelsäureesters des Anlagerungsproduktes von 8 Mol Aethylenoxyd und 1 Mol o-Phenylphenol,

$D_{25}$ Ammoniumsalz des sauren Schwefelsäureesters des Anlagerungsproduktes von 1 Mol Aethylenoxyd und 1 Mol 2-Aethylhexanol,

$D_{26}$ Ammoniumsalz des sauren Schwefelsäureesters des Anlagerungsproduktes von 2 Mol Aethylenoxyd an 1 Mol Kokosfettsäure,

$D_{27}$ Ammoniumsalz des sauren Schwefelsäureesters des Anlagerungsproduktes von 2 Mol Propylenoxyd an 1 Mol Kokosfettsäure.

Beispiel 1:

(a) 108 Teile des Farbstoffs der Formel

(101) 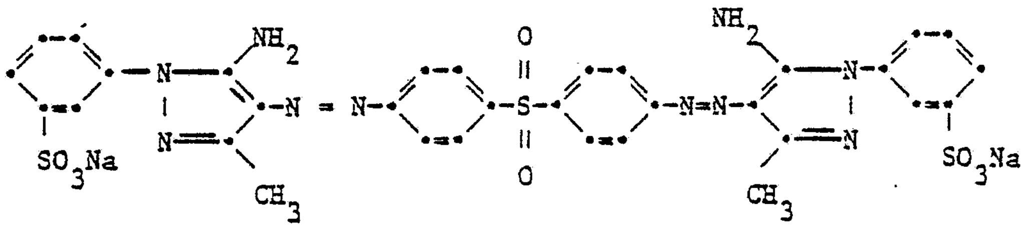

werden unter Rühren bei 50 bis 60°C innerhalb von 5 Minuten in das folgende Hilfsmittel/Lösungsmittelgemisch eingetragen:

| | |
|---|---|
| 49,2 Teile | des Umsetzungsproduktes $B_{30}$ |
| 49,2 Teile | des Umsetzungsproduktes $C_1$ (enthaltend etwa 2 % emulgiertes Siliconöl als Antischaummittel und etwa 2,2 % Essigsäure) |
| 98,4 Teile | Aethylenglykolmonoäthyläther |
| 147,6 Teile | Diäthylenglykol |
| 147,6 Teile | Wasser. |

Der Farbstoff wird als kochsalzhaltiger Rohfarbstoff eingesetzt. Nach zweistündigem Rühren bei 50 bis 60°C wird noch weitere 3 Stunden bei Raumtemperatur gerührt.

Zur Entfernung von ungelösten Anteilen (Verunreinigungen) wird die Lösung durch ein Stahlsieb mit etwa 40 µm Maschenweite gegeben (gegebenenfalls kann auch zentrifugiert werden).

Man erhält 585 Teile (97,5 % der Theorie) einer dünnflüssigen, homogenen, lagerstabilen Farbstofflösung, die auch nach 10 Monaten Lagerung bei Raumtemperatur noch stabil ist, d.h., keine Ausfällung (Kristallisation) des Farbstoffs zeigt. Anstelle des Umsetzungsproduktes $B_{30}$ kann auch eines der Umsetzungsprodukte $B_1$ bis $B_{29}$ oder $B_{31}$ bis $B_{43}$ verwendet werden.

(b) Eine Farbstofflösung mit ähnlich guten Eigenschaften erhält man, wenn man die gleiche Menge Butyrolacton anstelle von Aethylenglykolmonoäthyläther einsetzt.

(c) Eine Farbstofflösung mit ähnlich guten Eigenschaften weist z.B. die folgende Zusammensetzung auf:

15 % des Farbstoffs der Formel (101)
4,25 % des Umsetzungsprodukts $B_{30}$
4,25 % des Umsetzungsprodukts $C_1$
25,5 % Butyrolacton
25,5 % Diäthylenglykol
25,5 % Wasser.

Beispiel 2: Gemäss dem Verfahren nach Beispiel 1 stellt man eine stabile flüssige Farbstofflösung der folgenden Zusammensetzung her.

18,0 % des Farbstoffs der Formel (101)
8,2 % des Umsetzungsprodukts $B_{30}$
8,2 % des Umsetzungsprodukts $D_1$ (50%ige wässrige Zubereitung mit einem Gehalt von etwa 0,1 % emulgiertem Siliconöl)
16,4 % Butyrolacton
24,6 % Diäthylenglykol
24,6 % Wasser.

Die Farbstofflösung ist auch nach 10 Monaten noch homogen und zeigt keinerlei Ausfällungen. Anstelle des Umsetzungsprodukts $D_1$ kann auch eines der Umsetzungsprodukte $D_2$ bis $D_{27}$ verwendet werden.

Beispiel 3:

(a) 20 Teile des Farbstoffs der Formel

(102)

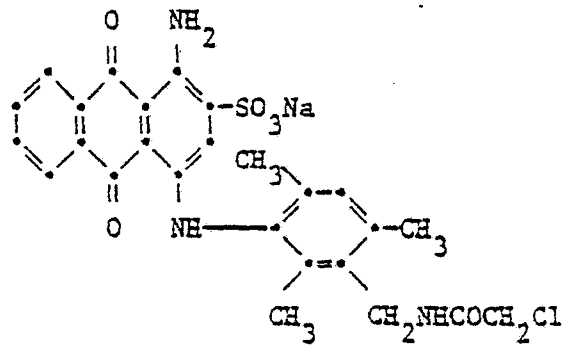

werden gemäss dem Verfahren nach Beispiel 1 in das folgende Hilfsmittel/Lösungsmittelgemisch von 50 bis 60°C unter Rühren eingetragen.

12 Teile des Umsetzungsprodukts $B_{30}$
12 Teile des Umsetzungsprodukts $C_1$
24 Teile Diäthylenglykol
16 Teile Aethylenglykolmonoäthyläther
16 Teile Wasser.

Man erhält eine dünnflüssige klare Farbstofflösung mit ausgezeichneter Lagerstabilität.

(b) Eine Farbstofflösung mit vergleichbar guten Eigenschaften erhält man, wenn man Tetramethylharnstoff anstelle von Aethylenglykolmonoäthyläther verwendet.

(c) Eine Farbstofflösung mit ebenfalls ausgezeichneter Lagerstabilität erhält man bei Verwendung der folgenden Komponenten:

20 Teile des Farbstoffs der Formel (102),
12 Teile des Umsetzungsprodukts $B_{30}$,
12 Teile des Umsetzungsprodukts $D_1$,
32 Teile Diäthylenglykol und
24 Teile Tetramethylharnstoff.

Beispiel 4: 22 Teile des Farbstoffes der Formel

(103) 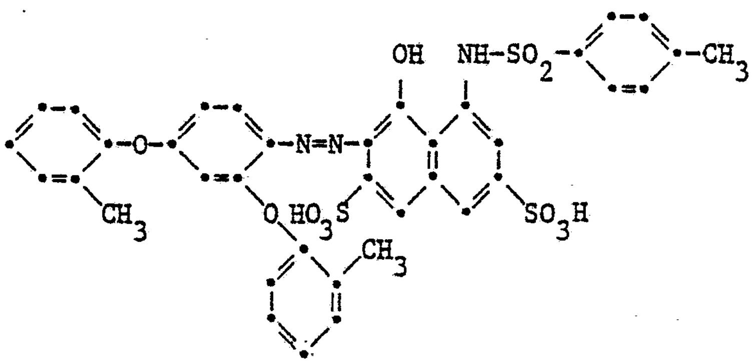

werden bei 50 bis 60°C unter Rühren in ein Hilfsmittel-/Tensidgemisch, bestehend aus

37,4 Teilen Aethylenglykol,

31,2 Teilen Aethylenglykol-mono-äthyläther,

4,7 Teilen des Umsetzungsprodukts $B_{30}$ und

4,7 Teilen des Umsetzungsprodukts $D_1$ (50%ige wässrigen Zubereitung mit einem Gehalt von ca. 0,1% emulgiertem Siliconöl) eingetragen.

Nach 2 Stunden Rühren bei 50 bis 60°C wird weitere 3 Stunden bei Raumtemperatur nachgerührt. Zur Abtrennung von unlöslichen Substanzen (Salzen und organischen Verunreinigungen) wird zentrifugiert oder filtriert (z.B. durch ein Sieb mit 5-15 µm Maschenweite). Nach dem Zentrifugieren erhält man 95 Teile (95% Ausbeute) einer homogenen Farbstofflösung. Diese Lösung zeigt gute Lagerstabilität. Auch die daraus hergestellten Spritzlösungen für die Färbung von Leder (in klaren, satten, roten Tönen angefärbt) zeigen eine gute Stabilität. Solche Spritzlösungen werden z.B. wie folgt hergestellt:

-10 Teile Farbstofflösung + 90 Teile deionisiertes Wasser

-10 Teile Farbstofflösung + 10 Teile Aethylenglykol-mono-äthyläther + 80 Teile Wasser.

Ersetzt man die 4,7 Teile des Umsetzungsproduktes $D_1$ durch 4,7 Teile des Umsetzungsprodukts $C_1$ (enthaltend ca. 2% emulgiertes Siliconöl),

erhält man eine Farbstofflösung mit ähnlich guten Eigenschaften.

Beispiel 5: Verwendet man anstelle des in Beispiel 4 verwendeten Hilfsmittel-/Tensidgemisches das folgende Gemisch, so erhält man eine Farbstofflösung mit ähnlichen Eigenschaften:

29,6 Teile Aethylenglykol,
31,2 Teile Tetramethylharnstoff,
4,7 Teile des Umsetzungsprodukts $B_{30}$,
4,7 Teile des Umsetzungsprodukts $D_1$ (50%ige wässrige Zubereitung wie in Beispiel 4) und
7,8 Teile Wasser.

Beispiel 6: Löst man gemäss Beispiel 4 22 Teile des Farbstoffes der Formel (103) in einem Gemisch von 31,2 Teilen Diäthylenglykol, 27,3 Teilen Diäthylenglykol-mono-äthyläther, 3,9 Teilen Wasser, 7,8 Teilen des Umsetzungsprodukts $B_{30}$ und 7,8 Teilen des Umsetzungsprodukts $D_1$ (50%ige wässrige Zubereitung wie in Beispiel 4), so erhält man nach dem Zentrifugieren 94,6 Teile einer homogenen Farbstofflösung (94,6% Ausbeute). Diese Lösung ist lagerstabil. Die daraus hergestellten Spritzlösungen (gemäss Beispiel 4) für die Lederfärbung zeigen eine ausgezeichnete Stabilität.

Beispiel 7: 20 Teile des Farbstoffes der Formel

(104) 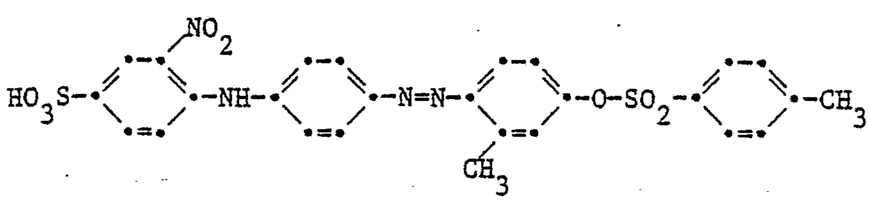

werden bei 50 bis 60°C unter gutem Rühren in ein Gemisch aus 40 Teilen Diäthylenglykol, 30 Teilen Aethylenglykol-mono-äthyläther, 5 Teilen Umsetzungsprodukt $B_{30}$ und 5 Teilen des Umsetzungsprodukts $C_1$ (enthaltend ca. 2% emulgiertes Siliconöl) eingetragen, 2 Stunden bei dieser Temperatur gerührt, und dann noch 3 Stunden bei Raumtemperatur

nachgerührt. Die schwach trübe Lösung wird zentrifugiert, wobei 96,3 Teile (96,3% Ausbeute) einer klaren Farbstofflösung isoliert werden. Diese Lösung zeigt gute Lagerstabilität. Auch die daraus hergestellten Lösungen (gemäss Beispiel 4) für die Spritzfärbung von Leder haben eine genügende Stabilität. Das Leder wird in klaren gelben Tönen gefärbt.

Beispiel 8: Ersetzt man das in Beispiel 7 verwendete Hilfsmittel-/Tensid-Gemisch durch folgende Mischung, so erhält man eine Farbstofflösung mit ähnlich guten Eigenschaften:

32 Teile Diäthylenglykol,
24 Teile Tetramethylharnstoff,
8 Teile des Umsetzungsprodukts $B_{30}$,
8 Teile des Umsetzungsprodukts $C_1$ (enthaltend ca. 2% emulgiertes Siliconöl) und
8 Teile Wasser.

Nach dem Zentrifugieren erhält man 97,1 Teile (97,1% Ausbeute) einer klaren Farbstofflösung. Eine Lösung mit ebenfalls ausgezeichneten Eigenschaften erhält man, wenn in der zuvor verwendeten Hilfsmittel-/Tensid-Mischung anstelle von 8 Teilen des Umsetzungsprodukts $C_1$ 8 Teile des Umsetzungsprodukts $D_1$ (50%ige wässrige Zubereitung wie Beispiel 4) eingesetzt werden. Aus dieser Lösung hergestellte Spritzlösungen (gemäss Beispiel 4) für die Lederfärbung zeichnen sich durch besonders gute Stabilität aus.

Beispiel 9: Wird das Hilfsmittel-/Tensid-Gemisch des Beispiels 8 durch folgende Mischung ersetzt, so erhält man bei Verwendung des Farbstoffs der Formel (104) eine klare, gelbe Farbstofflösung mit guter Stabilität:

32 Teile Diäthylenglykol,
28 Teile γ-Butyrolacton,
8 Teile des Umsetzungsprodukts $B_{30}$,

8 Teile des Umsetzungsprodukts $C_1$ (enthaltend ca. 2% emulgiertes Siliconöl) und

4 Teile Wasser.

Man erhält bei einem Einsatz von 20 Teilen des Farbstoffs der Formel (104) nach dem Zentrifugieren 96,9 Teile (96,9% Ausbeute) dieser klaren gelben Farbstofflösung.

Werden in diesem Hilfsmittel-/Tensid-Gemisch die 8 Teile des Umsetzungsprodukts $C_1$ durch 8 Teile des Umsetzungsprodukts $D_1$ (50%ige wässrige Zubereitung wie in Beispiel 4)) ersetzt, erhält man nach dem Zentrifugieren 96,6 Teile (96,6% Ausbeute) einer klaren, gelben Farbstofflösung. Aus dieser Lösung hergestellte Spritzlösungen (gemäss Beispiel 4) für die Lederfärbung zeichnen sich ebenfalls durch gute Stabilität aus.

<u>Beispiel 10:</u> 100 Teile der in Beispiel 1 c) erhaltenen Farbstofflösung werden mit 100 Teilen Aethylenglykol-mono-äthyläther und 800 Teilen Wasser zu einer Spritzlösung gemischt.

Diese Lösung wird in einer Menge von 20 bis 100 g pro Quadratmeter mittels einer Spritzpistole oder einer Spritzmaschine (z.B. versehen mit einem Rundläufer, welcher mit 4 bis 8 Pistolen besetzt ist) auf Leder (meist naturell, jedoch auch vorgefärbt) aufgetragen.

Man erhält so eine sehr gleichmässige grünstichig-gelbe Färbung auf dem Leder (je nach Auftragsmenge in hellen oder satten Tönen), welche sehr gute Echtheiten), wie z.B. Wassertropfenechtheit, Migrationsechtheit und Lösungsmittelechtheit, aufweist.

Patentansprüche:

1. Stabile konzentrierte flüssige Zubereitungen von Textil-, Leder- oder Papierfarbstoffen, dadurch gekennzeichnet, dass sie

(1) metallfreie Farbstoffe,

(2) nichtionische hydrotrop wirkende Verbindungen, mindestens eine der Komponenten (3) oder (4), wobei die Komponente

(3) ein Umsetzungsprodukt aus einer Fettsäure mit 8 bis 22 Kohlenstoffatomen und 1 bis 2 Mol Diäthanolamin und die Komponente

(4) eine Verbindung der Formel

$$R-A-(CH_2\underset{\underset{R_1}{|}}{C}HO)_m-X$$

ist, worin R ein aliphatischer Kohlenwasserstoffrest mit 8 bis 22 Kohlenstoffatomen oder ein cycloaliphatischer, aromatischer oder aliphatisch-aromatischer Kohlenwasserstoffrest mit 10 bis 22 Kohlenstoffatomen, $R_1$ Wasserstoff oder Methyl,

A —O— oder $-\underset{\underset{O}{\|}}{C}-O-$, X der Säurerest einer anorganischen, Sauerstoff enthaltenden Säure, der Säurerest einer mehrbasischen Carbonsäure oder ein Carboxyalkylrest und m eine Zahl von 1 bis 50 ist,

(5) Wasser, ein wasserlösliches organisches Lösungsmittel mit einem Siedepunkt von mindestens 80°C oder ein Gemisch aus beiden und

(6) gegebenenfalls übliche Einstellmittel,
enthalten.

2. Zubereitungen nach Anspruch 1, dadurch gekennzeichnet, dass sie als Komponente (5) ein wasserlösliches organisches Lösungsmittel mit einem Siedepunkt von mindestens 80°C oder ein Gemisch aus Wasser und diesem Lösungsmittel enthalten.

3. Zubereitungen nach Anspruch 1, dadurch gekennzeichnet, dass sie

10 bis 60 Gewichtsprozent der Komponente (1)
1 bis 25 Gewichtsprozent der Komponente (2)
1 bis 20 Gewichtsprozent mindestens einer der Komponenten (3) und (4) und
20 bis 88 Gewichtsprozent der Komponente (5) enthalten,

wobei sich die Gewichtsprozente auf die gesamte Zubereitung beziehen und die Summe der Bestandteile 100 % ergeben muss.

4. Zubereitungen nach einem der Ansprüche 1 bis 3, dadurch gekennzeichnet, dass die Farbstoffe Mono- oder Polyazofarbstoffe oder Anthrachinonfarbstoffe sind.

5. Zubereitungen nach Anspruch 1, dadurch gekennzeichnet, dass die nichtionischen hydrotrop wirkenden Verbindungen der Komponente (2) Umsetzungsprodukte mit einem Molgewicht von etwa 2000 bis 7000 aus

($a_1$) 1- bis 6-wertigen aliphatischen Alkoholen mit 1 bis 6 Kohlenstoffatomen, Monoalkyl- oder Monoalkylolmonoaminen oder Polyalkylenpolyaminen und

und die Carboxyvinylgruppe, zu erwähnen. Zweckmässig stehen diese labilen Substituenten in γ- oder in β-Stellung eines aliphatischen Restes, der direkt oder über eine Amino-, Sulfon- oder Sulfonsäureamidgruppe an das Farbstoffmolekül gebunden ist. Bei den in Betracht kommenden Farbstoffen, die als labile Substituenten Halogenatome enthalten, können diese austauschbaren Halogenatome auch in einem aliphatischen Acylrest, z.B. in einem Acetylrest, oder in β-Stellung bzw. in α- und β-Stellung eines Propionyl- oder Acrylrestes oder in einem heterocyclischen Rest, z.B. in einem Pyrimidin-, Pyridazin- oder Triazinring, stehen. Die Farbstoffe enthalten zweckmässig eine Gruppierung der Formel

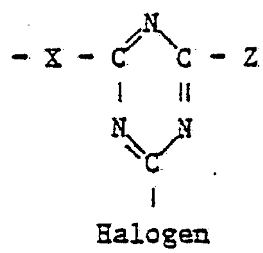

oder

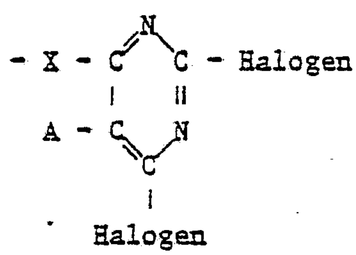

worin X eine Stickstoffbrücke und Z ein Wasserstoffatom, eine gegebenenfalls substituierte Aminogruppe, eine verätherte Oxy- oder Merkaptogruppe oder ein Halogenatom oder eine Alkyl-, Aryl- oder Aralkylgruppe und A ein Wasserstoff- oder Halogenatom bedeutet. Die Halogenatome sind z.B. Fluor- und Bromatome, vorzugsweise jedoch Chloratome.

Weitere geeignete Reaktivgruppierungen sind folgende Reste: Trichlorpyridazin-, Dichlorchinoxalin-, Dichlorbuten-, halogenierte Pyridazon-, Sulfonsäuredichlorpropylamid-, Allylsulfon-, Allylsulfid-, 2-Halogen-benzthiazolcarbamid- und β-Sulfatopropionsäure-

amidreste.

Ferner sind auch reaktive Oniumfarbstoffe zu erwähnen, welche z.B. an Stelle eines reaktiven Halogenatoms, einen reaktiven Ammonium- oder Hydraziniumrest tragen.

Die Farbstoffe können gegebenenfalls auch in Mischungen miteinander oder gegebenenfalls mit Farbstoffen eines anderen Typs vorliegen.

Geeignete nichtionische hydrotrop wirkende Verbindungen der Komponente (2) sind z.B.

Umsetzungsprodukte mit einem Molgewicht von etwa 2000 bis 7000 aus

($a_1$) 1- bis 6-wertigen aliphatischen Alkoholen mit 1 bis 6 Kohlenstoffatomen, Monoalkyl- oder Monoalkylolmonoaminen oder Polyalkylenpolyaminen und

($a_2$) 1,2-Propylenoxyd,

Umsetzungsprodukte aus Alkylenoxyden und einem wasserunlöslichen aliphatischen Monoalkohol mit mindestens 8 Kohlenstoffatomen, Umsetzungsprodukte aus Alkylenoxyden und Aryl- oder Alkylphenolen, Umsetzungsprodukte aus gesättigten Dicarbonsäuren mit 3 bis 10 Kohlenstoffatomen und 1,2-Propylenoxyd oder Polypropylenglykolen, Umsetzungsprodukte aus Fettsäuren mit 10 bis 18 Kohlenstoffatomen und 1,2-Propylenoxyd oder Polypropylenglykolen, Umsetzungsprodukte aus Fettsäuren mit 10 bis 18 Kohlenstoffatomen, 3- bis 6-wertigen Alkoholen und 1,2-Propylenoxyd oder Umsetzungsprodukte aus Fettsäuren mit 10 bis 18 Kohlenstoffatomen, Polyalkylenpolyaminen und 1,2-Propylenoxyd sind.

Rohfarbstoffes Synthesenebenprodukte und/oder wasserlösliche Salze sowie gegebenenfalls teilweise Wasser abtrennt, die so erhaltene Farbstoffzubereitung gegebenenfalls trocknet und sie dann mit den Komponenten (2) und (3), (2) und (4) oder (2), (3) und (4) in beliebiger Reihenfolge in Wasser, einem wasserlöslichen organischen Lösungsmittel oder deren Mischungen, gegebenenfalls in Gegenwart üblicher Einstellmittel, vermischt.

14. Verwendung der stabilen konzentrierten flüssigen Zubereitungen nach einem der Ansprüche 1 bis 11, zur Herstellung von Klotzflotten, Färbebädern, Druckpasten oder Spritzlösungen.